# FASCICULE DE BREVET EUROPEEN

(11) **EP 1 962 215 B1**
(45) Date de publication et mention de la délivrance du brevet: **14.11.2012**
(21) Numéro de dépôt: 08003348.3
(22) Date de dépôt: 25.02.2008
(51) Int. Cl.: G06F 21/00, H04L 29/06, H04L 12/413

(54) **Dispositif de connexion sélective permettant la connexion d'au moins un périphérique à un ordinateur cible et système de controle sélectif comportant un tel dispositif**
Selektive Verbindungsvorrichtung, die eine Verbindung von mindestens einem Peripheriegerät zu einem Zielcomputer zulässt und selektives Kontrollsystem, das eine solche Vorrichtung umfasst
Selective connection device allowing the connection of at least one peripheral to a target computer and selective control system including such a device

(30) Priorité: 26.02.2007 FR 0701363
(43) Date de publication de la demande: 27.08.2008
(73) Titulaire: SAGEM DEFENSE SECURITE, 75015 Paris (FR)
(72) Inventeur: Guillot, François, 75015 Paris (FR); Courteille, Jean-Marie, 75015 Paris (FR)
(74) Mandataire: Maillet, Alain

(56) Documents cités:
- EP-A- 1 533 947
- EP-A- 1 686 758
- WO-A-2005/085971
- US-A- 6 108 787
- US-A1- 2002 112 181
- MENOHER J.: "Owl Product Overview: Secure One-Way Data Transfer Systems" OWL PRODUCT FAMILY OVERVIEW, 29 juin 2006 (2006-06-29), pages 1-19, XP002454579
- LAGADEC P.: "Diode réseau et ExeFilter: 2 projets pour des interconnexions sécurisées" ACTES DU SYMPOSIUM SSTIC06, 5 juillet 2006 (2006-07-05), pages 1-15, XP002454580

## Description

La présente invention concerne un dispositif de connexion sélective permettant la connexion d'au moins un périphérique à un ordinateur cible et un système de contrôle sélectif comportant un tel dispositif. Elle vise en particulier le domaine des dispositifs de connexion sélective d'un organe de contrôle composé de périphériques d'entrée/sortie à différents ordinateurs cibles. Plus particulièrement, l'invention concerne un tel dispositif apportant des garanties de sécurité par l'interdiction de la communication entre les différents ordinateurs cibles pouvant être contrôlés.

Dans la suite, nous appellerons du terme générique ordinateur, tout dispositif électronique de traitement de l'information. Des dispositifs permettant le contrôle sélectif de plusieurs ordinateurs cibles, depuis un même ensemble de périphériques d'entrée/sortie, existent déjà. De tels dispositifs permettent la connexion sélective d'un écran et d'un clavier d'ordinateur à plusieurs ordinateurs. Ces dispositifs permettent généralement la connexion de plusieurs câbles vidéo, généralement selon la norme VGA *(Video Graphic Array* en anglais), et de plusieurs câbles de clavier et/ou souris, généralement selon la norme PS/2 *(Personal System*/*2* en anglais) ou USB *(Universal Serial Bus* en anglais) qui sont directement connectés aux unités centrales et au dispositif. D'un autre côté, un câble est connecté à un écran et deux autres au clavier et à la souris. Un sélecteur permet de brancher physiquement le câble vidéo connecté à l'écran à l'un des câbles connecté à l'une des unités centrales, tandis que les câbles clavier et souris sont connectés, via le même sélecteur, à la même unité centrale. Par une action sur le sélecteur, l'utilisateur peut ainsi changer l'unité centrale à laquelle sont connectés l'écran, le clavier et la souris qu'il utilise. De tels dispositifs sont bien connus et relativement simples à concevoir. Par contre, la liaison n'est possible que sur des distances relativement courtes. En particulier, la liaison vidéo est limitée à quelques mètres. Cette solution n'est donc pas envisageable dès lors que l'on veut pouvoir contrôler des unités centrales distantes de plus de quelques mètres.

Des solutions logicielles existent qui permettent le contrôle distant d'ordinateurs à travers un réseau de télécommunication. On peut citer à titre d'exemple le protocole de connexion de bureau à distance RDP *(Remote Desktop Protocol* en anglais) qui permet de prendre le contrôle d'une machine distante en transportant, via un réseau IP, les commandes issues du clavier local de contrôle à destination de l'ordinateur devant être contrôlé, d'une part, et, d'autre part, des commandes graphiques depuis l'ordinateur contrôlé vers l'ordinateur de contrôle. De cette façon, le contrôle de l'ordinateur distant se fait à travers le réseau depuis les périphériques de l'ordinateur local de la même manière que si l'écran, le clavier et la souris de l'ordinateur local étaient directement connectés à l'ordinateur distant. Il est possible par ce biais de se connecter successivement à différentes machines et donc d'effectuer un contrôle sélectif d'une pluralité d'ordinateurs distants depuis un même organe de contrôle. L'organe de contrôle est composé ici de l'écran, du clavier et de la souris de l'ordinateur local. Cette solution diffère de la précédente dans le fait qu'une unité centrale locale est nécessaire afin de gérer le protocole d'échange de commandes entre l'organe de contrôle et l'ordinateur contrôlé. Cette unité centrale permet d'organiser, d'une part, l'encapsulation des commandes de clavier et de souris dans des paquets de données envoyées via le réseau à l'ordinateur distant, ainsi que la réception et l'interprétation des commandes graphiques pour la reproduction locale de l'écran de contrôle de l'ordinateur distant, d'autre part. L'ordinateur distant doit être muni des moyens duaux permettant la réception et l'interprétation des commandes issues du clavier et de la souris, d'une part, et l'envoi des commandes graphiques, d'autre part. Diverses solutions basées sur ces principes sont aujourd'hui proposées pour tous les systèmes d'exploitation disponibles : on peut citer le protocole client serveur X11 au sein de X-windows sur les stations de travail UNIX.

Ces solutions logicielles fonctionnent très correctement dès que l'ordinateur local dédié au contrôle, et les ordinateurs distants que l'on souhaite contrôler sont connectés à un même réseau de communication. Dès lors que les ordinateurs distants appartiennent à des réseaux distincts, le problème se complique. En effet, pour faire fonctionner les solutions logicielles telles que décrites, il faut préalablement connecter l'ordinateur de contrôle au réseau de communication permettant la connexion à l'ordinateur distant que l'on souhaite contrôler, appelons-le, ordinateur cible. L'opération consistant à changer d'ordinateur cible devient dès lors relativement complexe car elle implique une déconnexion de la session de contrôle courante, la connexion sur un nouveau réseau de communication physique, le changement de paramètres réseaux pour prendre en compte le nouveau réseau et finalement l'initialisation d'une nouvelle connexion de contrôle avec le nouvel ordinateur cible. Nous avons donc là un premier problème lié à la complexité de l'opération de changement d'ordinateur cible.

Par ailleurs, une des raisons pour laquelle on peut être amené à souhaiter contrôler des ordinateurs cibles appartenant à des réseaux différents tient à des questions de sécurité. Dans ce cas, il est possible que ces différents ordinateurs cibles appartiennent à des réseaux qui ont été volontairement séparés car ils n'ont pas tous les mêmes contraintes de sécurité. Dans ce cas, il est généralement souhaité d'interdire la communication d'informations potentiellement sensibles entre ces différents réseaux, la propagation de codes malicieux, la prise de contrôle, etc. Dans ce contexte de désir de sécurité et d'étanchéité des différents réseaux à tout transfert de données, l'ordinateur local servant à contrôler alternativement des ordinateurs cibles sur ces différents réseaux représente une faiblesse du dispositif de sécurité. En effet, il est difficile de garantir que des informations ne puissent pas être stockées sur cet ordinateur de contrôle lors d'une session sur un premier réseau pour atteindre un second réseau lors d'une session de contrôle ultérieure.

L'invention vise à résoudre les problèmes précédents au moyen d'un dispositif de connexion sélective de différents moyens de traitement cibles. Ce dispositif permet de connecter au moins un périphérique d'ordinateur sélectivement à un ordinateur cible parmi une pluralité d'ordinateurs cibles. Les connexions entre le périphérique et l'ordinateur cible sont des connexions rendues physiquement unidirectionnelles. Dans le cas où des périphériques d'entrée d'informations et des périphériques de sortie d'informations sont à connecter à l'ordinateur cible, deux dispositifs de sélection unidirectionnels dans des directions inverses sont utilisés. De plus, dans ce cas, les moyens locaux de contrôle du ou des périphériques de sortie d'informations et des périphériques d'entrée d'informations sont physiquement séparés et non connectés entre eux.

L'invention offre ainsi l'avantage de permettre alternativement le contrôle distant d'une pluralité d'ordinateurs cibles, ceci sans soucis de distance entre l'organe de contrôle et les ordinateurs cibles et en garantissant physiquement l'impossibilité que des informations puissent transiter entre les différents ordinateurs cibles via l'organe de contrôle.

L'invention concerne un dispositif de connexion sélective permettant la connexion d'au moins un périphérique à un ordinateur cible parmi une pluralité d'ordinateurs cibles, comportant un moyen de contrôle du, ou des périphériques, ce moyen de contrôle étant connecté au périphérique, un sélecteur, un premier lien de communication de données entre le moyen de contrôle et le sélecteur, une pluralité de liens de communication de données entre la pluralité d'ordinateurs cibles et le sélecteur, chaque lien de la pluralité de liens étant connecté à un ordinateur cible de la pluralité d'ordinateurs cibles, le sélecteur permettant la connexion du premier lien à l'un quelconque des liens de la pluralité de liens afin de permettre la communication entre le moyen de contrôle et l'un quelconque des ordinateurs cibles, et où ledit dispositif de connexion sélective intègre un moyen de rendre physiquement unidirectionnelle la communication entre le moyen de contrôle et l'ordinateur cible.

Selon un mode particulier de réalisation de l'invention, les liens de communication étant des liens Ethernet, le moyen pour rendre physiquement unidirectionnelle la communication entre le moyen de contrôle et l'ordinateur cible est un dispositif diode, inséré sur au moins un des liens, constitué d'une première interface Ethernet comportant un port de réception et un port d'émission, d'une seconde interface Ethemet comportant un port de réception et un port d'émission, ledit port de réception de la première interface étant connecté au port d'émission de la seconde interface, le port de réception de la seconde interface étant maintenu déconnecté du port d'émission de la première interface et un signal d'intégrité étant émis sur le port d'émission de la première interface.

Selon un mode particulier de réalisation de l'invention, le dispositif diode, intégrant le sélecteur, intègre une pluralité de premières interfaces, le port de réception de chacune de ces premières interfaces étant connecté au port d'émission de la seconde interface via un moyen pour interrompre le signal commandé électriquement, de telle façon qu'un seul de ces ports de réception des premières interfaces soit activement connecté au port d'émission de la seconde interface.

Selon un mode particulier de réalisation de l'invention, le dispositif diode intégrant le sélecteur intègre une pluralité de premières interfaces, le port d'émission de chacune de ces premières interfaces étant connecté au port de réception de la seconde interface via un moyen pour interrompre le signal commandé électriquement, de telle façon qu'un seul de ces ports d'émission des premières interfaces soit activement connecté au port de réception de la seconde interface.

Selon un mode particulier de réalisation de l'invention, les liens de communication étant des liens Ethernet, le moyen pour rendre physiquement unidirectionnelle la communication entre le moyen de contrôle et l'ordinateur cible est intégré au sein d'une interface Ethernet dudit dispositif, laquelle interface comprend un module de gestion physique du lien Ethernet, un module de gestion MAC du lien Ethernet connecté par un bus au module de gestion physique du lien Ethernet, ledit bus étant constitué de liens unidirectionnels, et seuls les liens unidirectionnels utilisés par la communication dans la direction désirée étant connectés.

Selon un mode particulier de réalisation de l'invention, l'interface hébergeant le moyen pour rendre physiquement unidirectionnelle la communication entre le moyen de contrôle et l'ordinateur cible contient une pluralité d'interfaces Ethernet, une pluralité de modules de gestion physiques desdites interfaces et une pluralité de moyens pour interrompre le signal commandés électriquement de façon qu'un seul des modules physiques de la pluralité de modules physiques soit activement connecté au module de gestion MAC.

Selon un mode particulier de réalisation de l'invention, le dispositif comporte deux dispositifs tels que décrits précédemment, et est caractérisé en ce que les directions de communication entre les deux dispositifs sont inverses l'un de l'autre et que les sélecteurs sont couplés.

Selon un mode particulier de réalisation de l'invention, ledit dispositif est caractérisé en ce que les deux liens des deux pluralités de liens entre un ordinateur cible donné et chaque sélecteur sont constitués par un seul lien réseau connecté à une interface réseau unique dudit ordinateur cible connecté, dans une direction, à un premier desdits dispositifs tels que décrits précédemment et connecté, dans l'autre direction, aux seconds desdits dispositifs tels que décrits précédemment.

Selon un mode particulier de réalisation de l'invention, le dispositif comporte en outre un troisième sélecteur au niveau du lien entre l'un des contrôleurs et au moins un périphérique connecté audit contrôleur permettant la connexion directe d'au moins un ordinateur cible audit périphérique.

L'invention concerne également un système de contrôle sélectif d'un ordinateur cible parmi une pluralité d'ordinateurs cibles au moyen d'un organe de contrôle comportant au moins un périphérique d'ordinateur, au moins un périphérique d'ordinateur étant connecté à la pluralité d'ordinateurs cibles au moyen d'un dispositif de connexion sélective tel que décrit précédemment.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 présente l'architecture générale d'un mode de réalisation de l'invention,
La Fig. 2 présente l'architecture d'un mode de réalisation de diode Ethernet,
La Fig. 3 présente l'architecture d'un mode de réalisation du sélecteur d'entrée intégrant une diode Ethernet,
La Fig. 4 présente l'architecture d'un mode de réalisation du sélecteur de sortie intégrant une diode Ethernet, et
La Fig. 5 reprend une partie de la Fig. 1 et illustre une variante de réalisation de l'invention.

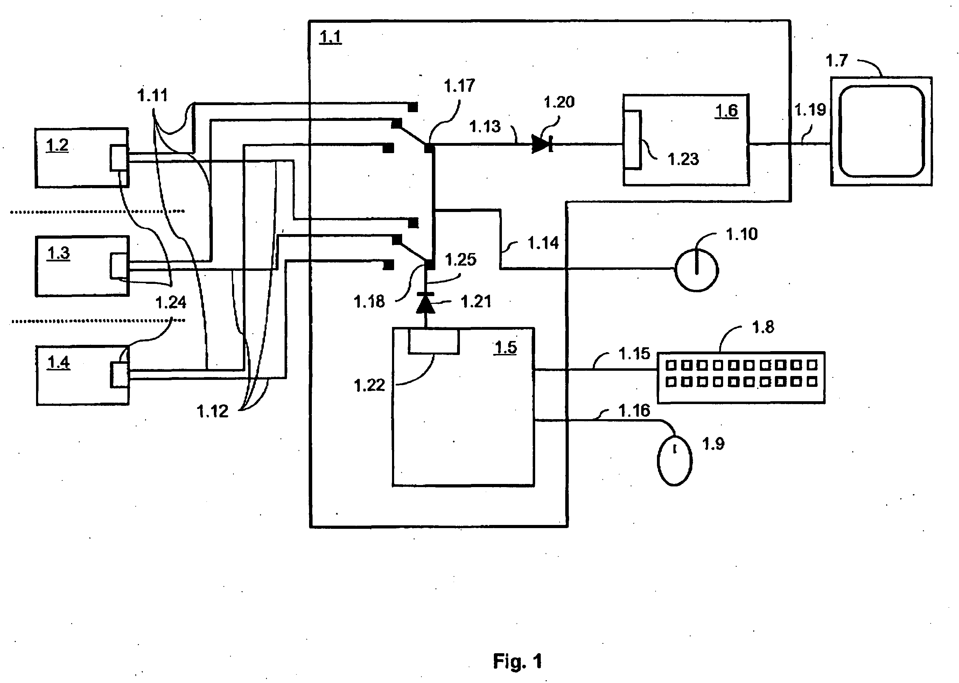

La Fig. 1 illustre l'architecture d'un mode de réalisation de l'invention. On y voit le dispositif de connexion sélective, référencé 1.1, qui permet de prendre le contrôle alternativement des ordinateurs 1.2, 1.3 et 1.4. Ce dispositif de connexion 1.1 est connecté localement à des périphériques permettant le contrôle des ordinateurs distants 1.2, 1.3 et 1.4. Ces périphériques comprennent un ou plusieurs périphériques de sortie d'informations. Sur la Fig. 1, nous avons représenté un seul périphérique de sortie d'informations, en l'occurrence un écran référencé 1.7. L'homme du métier comprendra qu'il est possible de connecter tout périphérique de sortie d'informations de la même manière en le connectant, par exemple, au contrôleur 1.6. Ces autres périphériques de sortie peuvent comprendre des moyens de restitution du son ou une imprimante par exemple. Cet écran est contrôlé localement par un contrôleur 1.6 qui peut être par exemple un ordinateur personnel doté d'une carte graphique. Dans ce cas, la liaison entre le contrôleur 1.6 et l'écran 1.7 est une liaison vidéo classique pouvant répondre à la norme VGA ou encore DVI *(Digital Visual Interface* en anglais). Des périphériques d'entrée d'informations sont également connectés au dispositif 1.1. Sur la Fig. 1, nous avons représenté un clavier 1.8 et une souris d'ordinateur 1.9 connectés respectivement via le lien 1.15 et le lien 1.16. Ces liens peuvent répondre à la norme USB *(Universal Serial Bus* en anglais) ou à toute autre norme de communication adaptée à la communication entre de tels périphériques et une unité centrale comme, par exemple, PS/2 *(Personal System*/*2* en anglais). Tout autre périphérique d'entrée d'informations peut être connecté de la même manière au dispositif 1.1, ces périphériques pouvant comprendre une boule roulante *(trackball* en anglais), une tablette graphique, ou tout autre périphérique d'entrée d'informations connectable à un ordinateur. Ces périphériques d'entrée d'informations sont connectés à un contrôleur des périphériques d'entrée référencé 1.5. Un organe de commande référencé 1.10 permet de commander via un lien 1.14 les deux sélecteurs 1.17 et 1.18. Le premier sélecteur 1.17 permet de connecter sélectivement un des ordinateurs cibles 1.2, 1.3 ou 1.4 au contrôleur de périphérique de sortie d'informations 1.6. De manière similaire, le sélecteur 1.18 permet de connecter sélectivement un des ordinateurs cibles 1.2, 1.3 ou 1.4 au contrôleur de périphérique d'entrée 1.5. Dans le mode préféré de réalisation de l'invention, les deux sélecteurs 1.17 et 1.18 fonctionnent couplé entre eux sous la commande synchronisée d'un seul organe de commande 1.10 de manière à garantir qu'à tout moment, le même ordinateur cible est connecté, d'une part, au contrôleur de périphériques de sortie d'informations 1.6 et, d'autre part, au contrôleur de périphériques d'entrée d'informations 1.5. Les différents ordinateurs cibles 1.2, 1.3 et 1.4 sont connectés via des liens 1.11 au sélecteur de sortie, c'est-à-dire au sélecteur connecté au contrôleur de périphériques de sortie d'informations, tandis qu'ils sont connectés via des liens 1.12 au sélecteur d'entrée, c'est-à-dire au sélecteur connecté au contrôleur de périphériques d'entrée d'informations 1.5.

Les liens entre les ordinateurs cibles et les sélecteurs, puis entre les sélecteurs et les contrôleurs, référencés 1.13 et 1.25, sont préférentiellement des liens permettant l'établissement de communication de données. Dans un mode préféré de réalisation de l'invention, ces liens sont des liens Ethernet standardisés par les normes 802.3 et 802.x de l'IEEE *(Institute of Electrical and Electronics Engineers* en anglais). La connexion Ethernet permet la communication de données entre les contrôleurs 1.5 et 1.6 et l'ordinateur cible sélectionné par les sélecteurs 1.17 et 1.18. Les contrôleurs 1.5 et 1.6 ainsi que les ordinateurs cibles 1.2, 1.3 et 1.4 disposent de modules logiciels spécifiques 1.22, 1.23 et 1.24 gérant la communication de données entre les contrôleurs et l'ordinateur cible. Bien que décrite sur la base de liens Ethernet, l'invention peut également utiliser tout type de lien entre les ordinateurs cibles et les contrôleurs comme, par exemple, des liens série ou autres. Le mode de réalisation préféré est basé sur des liens Ethernet 100BASE-Tx pour les communications. Les communications sont gérées de la manière suivante. Le module d'envoi 1.22 des données des périphériques d'entrée d'informations encapsule lesdites données et envoie sur le lien Ethernet à destination de l'ordinateur cible sélectionné lesdites données encapsulées issues des périphériques d'entrée. Ces données sont collectées par le contrôleur 1.5. Un module de réception correspondant, au sein du module 1.24, reçoit ces données, les décode et les fournit à la couche applicative de l'ordinateur cible sélectionné. Ce module fonctionne comme pilote des périphériques distant. De cette façon, vu de la couche applicative de l'ordinateur cible sélectionné, tout se passe comme si les périphériques d'entrée comme le clavier ou la souris étaient directement connectés à l'ordinateur cible. Le contrôleur 1.5 initialise au démarrage les périphériques d'entrée, puis transmet les actions de l'utilisateur au module 1.24 de l'ordinateur cible. Pour ce faire, le contrôleur 1.5 embarque un pilote de périphérique et un système d'exploitation réduit comme, par exemple, un système temps réel basé sur un simple gestionnaire de tâches *(scheduler* en anglais). Le protocole de communication peut être basé sur le protocole IP *(Internet Protocol* en anglais) au niveau transport et sur le protocole UDP *(User Datagram Protocol* en anglais) pour la couche de contrôle. Ces protocoles sont bien connus de l'homme du métier et simples à implémenter. Pour gérer les problèmes de changement d'espace d'adressage lorsque l'on bascule entre deux ordinateurs cibles l'envoi des données, ou réalise un mode multipoint *(Multicast* en anglais). Le mode multipoint permet de définir une adresse de diffusion multipoint indépendante des adresses IP des ordinateurs de destination. Les paquets de données envoyés avec cette adresse de diffusion multipoint comme adresse de destination seront reçus par tous les ordinateurs s'étant préalablement abonnés à ladite adresse de diffusion multipoint. Le détail du fonctionnement de la diffusion multipoint peut être trouvé dans la RFC *(Request For Comment* en anglais) 3171, sachant que les RFCs sont une collection décrivant les protocoles utilisés sur Internet maintenue par l'IETF *(Internet Engineering Task Force* en anglais). Tous les ordinateurs cibles susceptibles d'être sélectionnés et contrôlés par le dispositif vont donc s'abonner à ladite adresse de diffusion de façon à recevoir les données envoyées par le contrôleur 1.5.

De manière similaire, les données destinées aux périphériques de sortie vont être envoyées via le lien 1.11 vers le contrôleur 1.6. Ces données sont également encapsulées dans des paquets en utilisant les protocoles IP et UDP par le module 1.24 à destination du module 1.23 du contrôleur 1.6. Ici, la destination est connue et toujours la même. Il est donc possible d'utiliser soit un mode de diffusion multipoint comme précédemment, soit un mode de diffusion unipoint *(Unicast* en anglais). Il est possible aussi d'utiliser pour la vidéo des protocoles existants permettant de déporter les graphismes générés par un ordinateur sur un ordinateur distant. De nombreux protocoles existent en fonction de l'environnement logiciel choisi. Par exemple, dans le monde UNIX, le protocole X11 du système X-windows permet d'envoyer des commandes graphiques permettant de visualiser sur un ordinateur local la vidéo d'un ordinateur distant. Le protocole RDP permet également, sous la forme d'un serveur TSE *(Terminal Server Edition* en anglais) envoyant des commandes graphiques à un client, de transférer des graphiques à un écran distant. Le mode de réalisation préféré est basé sur le protocole RDP permettant l'envoi, par un serveur TSE embarqué dans le module 1.24, de commandes graphiques à un client embarqué dans le module 1.23 du contrôleur 1.6. De cette façon, l'écran 1.17 permet de visualiser les graphiques issus de l'ordinateur cible sélectionné. Selon une variante d'implémentation, le module 1.24 embarque un module de compression MPEG *(Moving Picture Experts Group* en anglais) qui génère un flux de vidéo compressé à destination du contrôleur 1.6. Celui-ci embarque un décodeur MPEG et génère sur l'écran 1.17 la vidéo reçue. Cette variante peut être plus adaptée en fonction de la nature des graphiques transmis, par exemple dans le cas de vidéo. Par contre, dans le cas où les graphiques sont constitués des images d'une interface homme machine informatique classique, un protocole de commandes vectorielles, tel que le protocole RDP sera moins gourmand en bande passante.

Il est supposé que les ordinateurs cibles que l'on veut contrôler peuvent appartenir à des réseaux différents. Ces différents réseaux peuvent obéir à des impératifs de sécurité différents. De ce fait, il est souhaitable de garantir que, dans un contexte hautement sécurisé, il n'est pas possible d'utiliser le dispositif de connexion sélectif pour transmettre des informations entre les différents ordinateurs cibles. À cette fin, les liens connectant l'ordinateur cible et les contrôleurs sont rendus physiquement unidirectionnels. Les deux contrôleurs 1.5 et 1.6 n'étant pas connectés entre eux, le caractère unidirectionnel des liens rend impossible tout transfert d'informations entre deux ordinateurs cibles. En effet, le lien entre le contrôleur de périphérique d'entrée et l'ordinateur cible ne laissant passer les informations que dans le sens du contrôleur vers l'ordinateur, aucune information ne peut remonter vers le contrôleur. D'un autre côté, des informations transmises via le lien unidirectionnel entre l'ordinateur cible et le contrôleur des périphériques de sortie 1.6 peuvent être éventuellement stockées au niveau dudit contrôleur 1.6, mais n'ont aucun moyen physique d'être transmises depuis ce contrôleur vers un autre ordinateur cible. En effet, elles ne peuvent, physiquement, pas remonter le lien vers les ordinateurs cibles et comme aucune connexion n'existe vers le contrôleur des périphériques d'entrée 1.5, ne peuvent pas non plus remonter via ce lien vers un autre ordinateur cible.

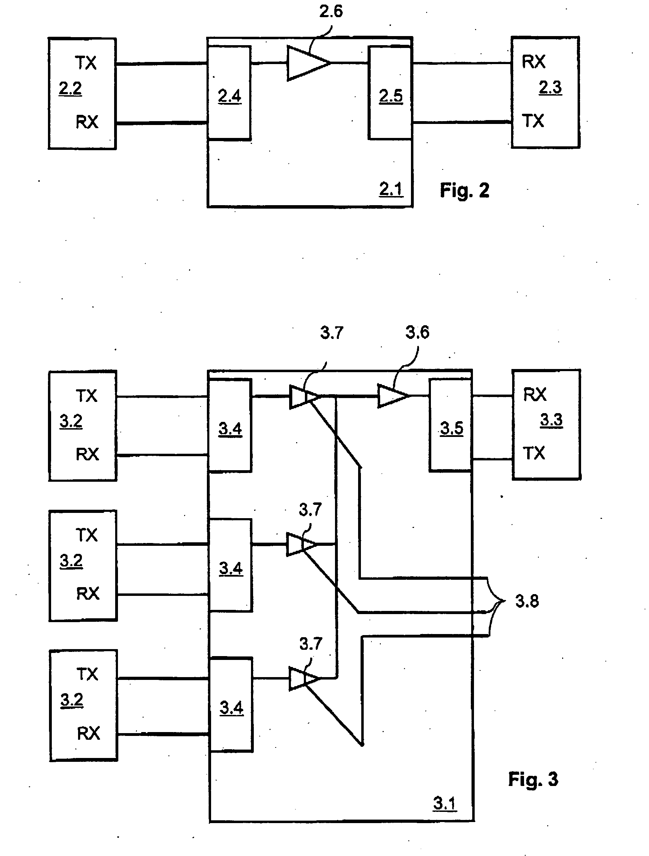

Les liens Ethernet sont rendus physiquement unidirectionnels, par exemple, par l'utilisation de ce que nous appelons une diode Ethernet. Plusieurs implémentations de cette diode Ethemet sont possibles. La Fig. 2 décrit schématiquement le fonctionnement d'une telle diode selon un premier mode de réalisation. Un lien Ethernet est composé d'au moins deux paires de conducteurs permettant la transmission des informations. Chaque paire est dédiée à un sens de communication. Le lien est branché sur une interface Ethernet comportant deux ports : un premier port d'émission TX et un second port de réception RX. La Fig. 2 montre le fonctionnement d'une diode 2.1 sur un lien Ethernet entre une première interface Ethernet 2.2, constituée de ses deux ports, un port de réception RX et un port de transmission TX. Le lien est également branché sur une seconde interface Ethernet 2.3, où les ports sont inversés en réception et en transmission. La diode assure le transfert des informations depuis la première interface vers la seconde en interdisant, physiquement, tout transfert d'informations dans le sens inverse. La diode 2.1 comporte elle-même deux interfaces Ethemet : une première interface 2.4 et une seconde 2.5. La première interface 2.4 génère la porteuse attendue par l'interface 2.2 sur son port de réception pour signaler que le lien est actif et que des informations peuvent être émises sur le port d'émission TX de l'interface 2.2. Cette porteuse constitue un signal d'intégrité de la liaison Ethernet. L'amplificateur analogique rapide 2.6 assure le passage des signaux dans le sens de la transmission depuis le port de réception de la première interface 2.4 vers le port d'émission de la seconde interface 2.5 mais empêche la remontée de signaux dans l'autre sens. Ceci est nécessaire pour se prémunir d'un éventuel retournement du lien, cette capacité de retournement étant maintenant généralement incluse dans les modules de gestion des interfaces Ethernet. D'éventuels signaux émis par la seconde interface 2.3 sont arrêtés par l'interface 2.5 au sein de la diode et ne peuvent pas transiter vers la première interface 2.4. Il n'y a pas de connexion entre le port de réception de la seconde interface 2.5 et le port d'émission de la première interface 2.4. D'autres implémentations d'une telle diode sont possibles, par exemple en insérant dans la diode, en lieu et place de l'amplificateur analogique, un composant recopiant les signaux reçus de la première interface sur le lien à destination de la seconde, mais interdisant la recopie inverse.

Une telle diode est insérée préférentiellement sur le lien Ethernet entre des contrôleurs 1.5 et 1.6 et les sélecteurs mais elle peut être également insérée sur chaque lien entre les ordinateurs cibles et les sélecteurs ou en tout point de ces liaisons entre les contrôleurs et les ordinateurs cibles. Nous verrons des modes de réalisation où la diode est intégrée au sélecteur, voire à l'interface Ethernet du contrôleur.

Le fait que les liens entre les deux contrôleurs, en entrée et en sortie, et les ordinateurs cibles soient unidirectionnels implique certaines contraintes sur la transmission des informations sur ces liens. C'est une des raisons qui font préférer le protocole UDP pour les échanges d'informations sur ces liens. En effet, ce protocole ne nécessite pas d'acquittements et est donc fonctionnel sur des liens unidirectionnels. Certains ajustements sont tout de même à prévoir au niveau des contrôleurs, et au niveau du module 1.24 sur les ordinateurs cibles, pour permettre la gestion des périphériques connectés en l'absence de communications bidirectionnelles avec l'ordinateur cible. Par exemple, l'échange d'informations relatives à la taille et aux résolutions acceptées par l'écran ne peut avoir lieu à l'initialisation de celui-ci. Il est donc nécessaire de choisir cette définition et de paramétrer le mode graphique des ordinateurs cibles avec cette définition choisie pour assurer le fonctionnement du lien graphique.

De même, certains périphériques d'entrée, par exemple le clavier, peuvent afficher des indications d'état. Cet affichage est normalement piloté par l'ordinateur auquel ils sont connectés. On citera par exemple, l'état de la touche de verrouillage majuscule ou de verrouillage du pavé numérique. Le lien étant unidirectionnel, l'ordinateur cible ne peut plus piloter ces touches et activer l'allumage des éventuels indicateurs d'état sur le clavier. Pour résoudre ce problème, il est convenu que le contrôleur des périphériques d'entrée, en fonction de l'état affiché du clavier, envoie l'état des touches à l'ordinateur cible. Celui-ci, au niveau du module 1.24, assure la cohérence en simulant au besoin l'appui sur les touches de verrouillage pour modifier l'état de l'ordinateur cible. De cette façon, la cohérence est maintenue entre l'état du clavier tel que le clavier l'affiche grâce à ses indicateurs intégrés et l'état du clavier tel qu'il est connu de l'ordinateur cible.

L'obligation d'utiliser des protocoles sans acquittement pour le transfert des informations entre les contrôleurs et l'ordinateur cible impose aussi certaines contraintes dans la gestion des erreurs de transmission. Il n'est plus possible de reposer sur les acquittements pour effectuer des retransmissions d'informations mal reçues ou non reçues. Pour pallier ce problème, le système de transmission peut comprendre, dans certains modes de réalisation, des mécanismes de redondance comme l'utilisation de codes correcteurs d'erreurs selon la technique FEC (*Forward Error Correction* en anglais) ou de retransmission automatique des données.

Dans un mode particulier de réalisation de l'invention, le sélecteur du lien vers les périphériques de sortie et la diode Ethernet assurant le côté unidirectionnel du lien est intégré dans une même réalisation. Cette variante est décrite Fig. 3 qui reprend le schéma de la Fig. 2, à la différence que maintenant la diode permet la connexion de plusieurs interfaces 3.2 du côté de la source. Chacune de ces interfaces est connectée à l'interface 3.4 qui correspond à l'interface 2.4 de la Fig. 2 et qui permet l'activation de l'interface Ethernet par l'envoi d'une porteuse sur le port de réception de l'interface. Les ports de sortie des interfaces 3.4 sont connectés à des amplificateurs analogiques rapides commandés électriquement 3.7, avant d'être interconnectés à un amplificateur analogique rapide simple 3.6. De cette façon, le sélecteur est réalisé par l'activation de l'un des amplificateurs analogiques, agissant comme un interrupteur commandé électriquement, permettant le passage des signaux issus de l'interface correspondante, tandis que les autres amplificateurs sont non passants. À un moment donné, seul le port de réception d'une des interfaces d'entrée 3.4 est activement connecté au port d'émission de l'interface de sortie 3.5. L'activation d'un signal de commande électrique 3.8 permet donc la sélection de l'ordinateur cible connecté à l'interface correspondante. Un tel sélecteur couplé à une diode peut être réalisé pour un nombre quelconque d'interfaces. L'application du même principe avec un schéma inversé permet également de réaliser le sélecteur de périphérique d'entrée intégré à la diode.

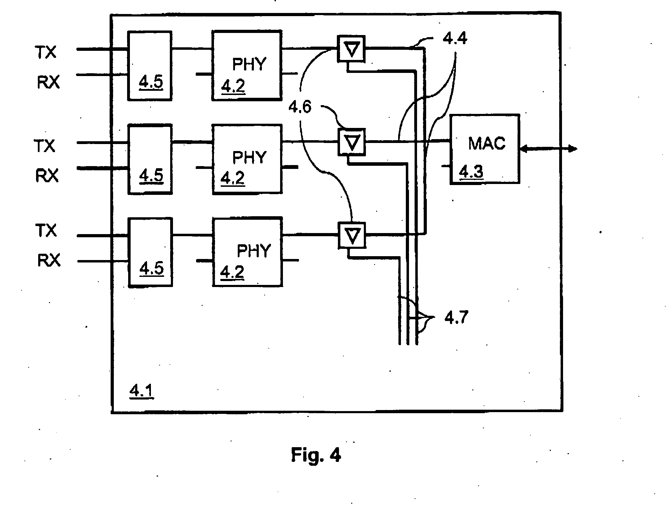

La Fig. 4 illustre un autre mode de réalisation d'un sélecteur couplé avec une diode. Dans ce mode de réalisation, le sélecteur et la diode sont réalisés au sein d'une interface Ethernet possédant plusieurs paires de ports de réception et de ports d'émission. Dans ce mode de réalisation, la diode est basée sur la coupure des liens assurant la transmission dans l'une des directions d'un bus de données entre un module de gestion de la couche physique d'une interface Ethernet et le module de gestion du média appelé module de gestion MAC (*Media Access Control* en anglais). En effet, l'architecture classique d'une interface Ethernet se compose, d'une part, d'un module de gestion physique 4.2 du lien. Ce module est responsable de la génération et de l'analyse des signaux physiques qui transitent sur le lien. L'interface se compose, d'autre part, d'un module de gestion MAC gérant l'analyse et l'assemblage des paquets selon le protocole Ethernet ainsi que la communication avec les couches supérieures. En réception, les signaux qui transitent sur le lien sont analysés et transformés en données numériques par la couche physique. Ces données numériques sont ensuite transmises à la couche MAC qui les analyse sous la forme de paquets ou de trames Ethernet. Ces paquets sont ensuite transmis à la couche supérieure, généralement à une pile IP. En émission, la couche MAC reçoit les données à transmettre des couches supérieures, typiquement de la pile IP sous la forme de paquets IP. Elle assemble les paquets ou les trames Ethernet véhiculant les données IP et les transmet à la couche physique pour leur émission sous la forme de signaux sur le lien. La connexion entre le module physique PHY et le module MAC se fait grâce à un bus bidirectionnel. Ce bus répond à la norme MII (*Media Independant Interface* en anglais) d'IEEE. Ce bus se compose de liens unidirectionnels, il est dès lors possible de ne connecter que les liens correspondant à une direction. Fig. 4, le lien provenant du contrôleur de périphériques d'entrée 1.5 est connecté sur un module MAC d'entrée référencé 4.3. Seuls les liens permettant l'émission des données depuis le module MAC 4.3 à destination des modules physiques PHY sont connectés. Les liens en réception du module MAC ne sont pas connectés. Ces liens sont divisés en trois branches et chaque branche est connectée à un module physique PHY référencé 4.2 par l'intermédiaire d'un tampon à trois états 4.6. Les tampons à trois états 4.6 fonctionnent en interrupteurs et sont commandés par des liens électriques 4.4 permettant d'assurer qu'à un instant donné un seul chemin est ouvert entre le module MAC 4,3 et l'un des modules PHY 4.2. Chaque module PHY 4.6 est connecté sur un port d'émission TX d'une interface Ethernet correspondante pour permettre l'émission des signaux générés par le module PHY. Ce branchement se fait par l'intermédiaire d'une interface Ethernet 4.5 correspondant aux interfaces 3.5 et 2.5 ayant pour fonction d'arrêter tout signal provenant du port de réception RX et arrivant sur l'interface Ethernet. Un tel dispositif 4.1 permet d'intégrer un sélecteur et une diode Ethernet. Selon cette variante également, l'inversion du schéma est possible pour réaliser selon le même principe l'intégration du sélecteur de périphériques de sortie et de la diode Ethernet. Il est à noter qu'une réalisation simplifiée comportant un seul module physique et sans tampon trois états conduit à un autre mode de réalisation d'une simple diode Ethernet sans sélecteur intégrée à une interface Ethernet couplée à un MAC.

Avantageusement, le sélecteur de la Fig. 3 et celui de la Fig. 4 peuvent être couplés. Dans ce cas, les interfaces côté source 3.2 sont connectées par leur port d'émission TX, à un sélecteur tel que celui de la Fig. 3 et par leur port de réception, à un sélecteur tel que celui de la Fig. 4. Dans ce mode de réalisation, les interfaces internes 2.4 n'ont plus besoin de générer de porteuses pour activer l'interface 3.2 correspondante, cette activation étant maintenant réalisée par le module 4.5 correspondant. Dans ce cas, une même interface réseau au niveau de l'ordinateur cible est utilisée pour l'accès aux deux sélecteurs via un même câble réseau Ethernet dont une paire est utilisée pour les communications dans une direction et dont l'autre paire pour les communications dans l'autre direction, chaque paire communiquant avec un contrôleur différent 1.5 et 1.6.

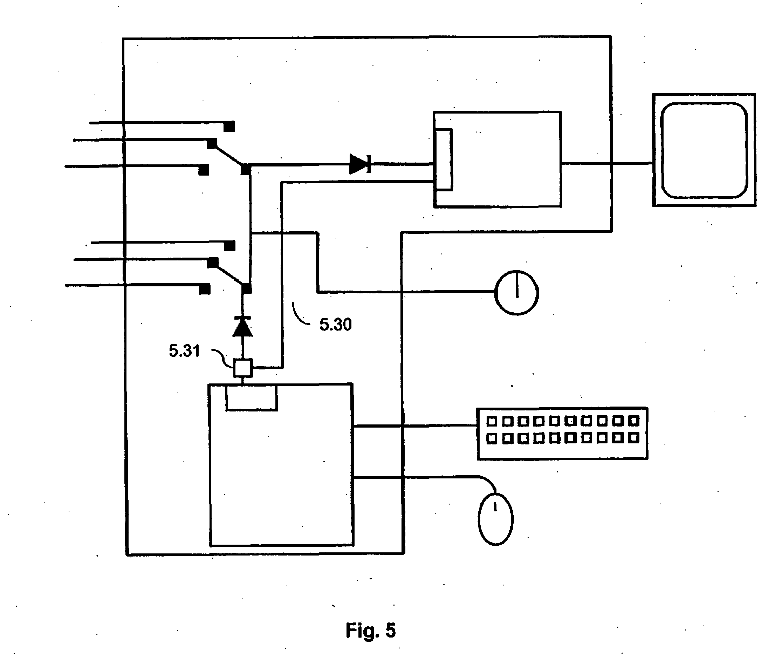

Selon un autre mode de réalisation de l'invention, dans un contexte où le niveau de sécurité demandé est moins élevé que précédemment, il est possible d'implémenter une voie de retour limitée depuis le contrôleur de périphériques de sortie vers l'ordinateur cible. Cette variante ne permet plus de garantir, au niveau physique, qu'aucune information issue d'un ordinateur cible ne puisse remonter vers un autre ordinateur cible. Cependant, grâce à certaines précautions, les risques qu'un tel détournement puisse être réalisé sont maintenus extrêmement faibles. Cette variante est illustrée Fig. 5. Cette figure reprend la Fig. 1, les ordinateurs cibles n'étant pas représentés, et montre un lien 5.30 entre le contrôleur 1.6 et le lien Ethernet unidirectionnel connectant le contrôleur de périphériques d'entrée 1.5 et le sélecteur de périphériques d'entrée 1.18. Le choix de ne pas connecter directement les deux contrôleurs permet d'éviter que le contrôleur de périphériques d'entrée soit détourné pour accumuler et traiter, voire manipuler, l'information ainsi remontée. Cette information est directement injectée sur le lien Ethernet sous la forme d'informations injectées dans les trames Ethernet incluses dans le flux existant par l'injecteur 5.31. Cette injection directe des informations sur le lien remontant permet déjà de limiter les risques de détournement de cette fonctionnalité. Une autre contrainte, limitant elle aussi ce risque, peut être prise, seule ou en conjonction avec la première, et consiste à limiter de manière drastique la bande passante de ce lien. Dans la pratique, ce lien est limité à l'injection de quelques bits, typiquement 2 à 4 octets, permettant de construire un protocole avec acquittement sur le lien descendant entre l'ordinateur cible et le contrôleur de périphérique de sortie. Cette variante apporte donc une plus grande souplesse dans l'implémentadon du protocole de gestion du ou des périphériques de sortie au prix d'un léger amoindrissement de la garantie de sécurité du dispositif de connexion sélective.

Selon un mode particulier de réalisation de l'invention, un tel dispositif peut être utilisé limité à une seule branche. Dans ce cas, le dispositif ne dispose que d'un seul sélecteur permettant le branchement d'un contrôleur de périphériques à un ordinateur cible via un lien unidirectionnel. Ce dispositif à une seule branche peut permettre de brancher soit uniquement des périphériques d'entrée d'informations, soit uniquement des périphériques de sortie d'informations. Un tel dispositif à une seule branche permet de garantir, tout comme le dispositif à deux branches, que des informations ne peuvent pas transiter par le contrôleur entre deux ordinateurs cibles.

Selon un mode particulier de réalisation de l'invention, un troisième sélecteur peut être implémenté au niveau du lien entre le contrôleur de périphériques de sortie et le périphérique de sortie lui-même. Par exemple, dans le cas où le périphérique de sortie est un écran, un sélecteur sur le lien vidéo, qu'il soit du type VGA, DVI ou autre, peut permettre la sélection d'un ordinateur cible proche, directement via ce lien vidéo. Cet ordinateur cible supplémentaire sera donc connecté au contrôleur de périphériques d'entrée via le sélecteur de périphériques d'entrée 1.18 et directement au périphérique de sortie via ce nouveau sélecteur, sans être connecté sur le sélecteur de périphérique de sortie 1.17.

La description ci-dessus décrit la connexion dudit dispositif de connexion sélective directement à des ordinateurs cibles. Il est également possible que cette connexion soit indirecte et que des dispositifs de connexion réseau, comme des commutateurs, soient insérés entre le dispositif de sélection et l'ordinateur cible. Dans ce cas, le module de gestion de l'envoi réception des informations aux périphériques 1.24 reste embarqué sur l'ordinateur cible, tandis que le lien Ethernet est connecté au dispositif réseau.

## Revendications

1. Dispositif de connexion (1.1) sélective permettant la connexion d'au moins un périphérique (1.7, 1.8, 1.9) à un ordinateur cible (1.3) parmi une pluralité d'ordinateurs cibles (1.2, 1.3, 1.4), comportant:
- un moyen de contrôle (1.5, 1.6) du, ou des périphériques (1.7, 1.8, 1.9), ce moyen de contrôle étant connecté au périphérique;
- un sélecteur (1.17, 1.18) ;
- un premier lien (1.13, 1.25) de communication de données entre le moyen de contrôle (1.5, 1.6) et le sélecteur (1.17, 1.18) ;
- une pluralité de liens de communication de données (1.11, 1.12) entre la pluralité d'ordinateurs cibles (1.2, 1.3, 1.4) et le sélecteur (1.17, 1.18), chaque lien de la pluralité de liens (1.11, 1.12) étant connecté à un ordinateur cible de la pluralité d'ordinateurs cibles (1.2, 1.3, 1.4), le sélecteur (1.17, 1.18) permettant la connexion du premier lien à l'un quelconque des liens de la pluralité de liens afin de permettre la communication entre le moyen de contrôle (1.5, 1.6) et l'un quelconque des ordinateurs cibles (1.2, 1.3, 1.4) ;
**caractérisé en ce que** ledit dispositif de connexion sélective intègre :
- un moyen (1.20, 1.21) pour rendre physiquement unidirectionnelle la communication entre le moyen de contrôle et l'ordinateur cible.

2. Dispositif selon la revendication 1, **caractérisé en ce que**, les liens de communication étant des liens Ethernet, le moyen pour rendre physiquement unidirectionnelle la communication entre le moyen de contrôle et l'ordinateur cible est constitué d'un dispositif diode (2.1) inséré sur au moins un des liens et constitué d'une première interface Ethernet (2.4) comportant un port de réception et un port d'émission et d'une seconde interface Ethernet (2.5) comportant un port de réception et un port d'émission, le port de réception de la première interface étant connecté au port d'émission de la seconde interface, le port de réception de la seconde interface étant maintenu déconnecté du port d'émission de la première interface et un signal d'intégrité étant émis sur le port d'émission de la première interface.

3. Dispositif selon la revendication 2, **caractérisé en ce que** le dispositif diode intégrant le sélecteur comprend une pluralité de premières interfaces (3.4), le port de réception de chacune de ces premières interfaces étant connecté au port d'émission de la seconde interface via un moyen (3.7)pour interrompre le signal commandé électriquement, de telle manière qu'un seul de ces ports de réception des premières interfaces soit activement connecté au port d'émission de la seconde interface.

4. Dispositif selon la revendication 2, **caractérisé en ce que** le dispositif diode intégrant le sélecteur comprend une pluralité de premières interfaces, le port d'émission de chacune de ces premières interfaces étant connecté au port de réception de la seconde interface via un moyen pour interrompre le signal commandé électriquement, de telle manière qu'un seul de ces ports d'émission des premières interfaces soit activement connecté au port de réception de la seconde interface.

5. Dispositif selon la revendication 1, **caractérisé en ce que**, les liens de communication étant des liens Ethernet, le moyen pour rendre physiquement unidirectionnelle la communication entre le moyen de contrôle et l'ordinateur cible et intégré au sein d'une interface Ethernet dudit dispositif, laquelle interface comprend un module de gestion physique (4.2) du lien Ethernet et un module de gestion MAC (4.3) du lien Ethernet connecté par un bus (4.4) au module de gestion physique du lien Ethernet, ledit bus étant constitué de liens unidirectionnels, seuls les liens unidirectionnels utilisés par la communication dans la direction désirée étant connectés.

6. Dispositif selon la revendication 5, **caractérisé en ce que** l'interface hébergeant le moyen pour rendre physiquement unidirectionnelle la communication entre le moyen de contrôle et l'ordinateur cible contient une pluralité d'interfaces Ethernet (4.5), une pluralité de modules de gestion physiques desdites interfaces (4.2), et une pluralité de moyens pour interrompre le signal commandés électriquement (4.4) de manière qu'un seul des modules physiques (4.2) de la pluralité de modules physiques soit activement connecté au module de gestion MAC (4.3).

7. Dispositif de connexion sélective comportant deux dispositifs selon l'une des revendications 1 à 6, **caractérisé en ce que** les directions de communication des deux dispositifs sont inverses l'un de l'autre et **en ce que** les sélecteurs sont couplés.

8. Dispositif de connexion sélective selon la revendication 7, **caractérisé en ce que** les deux liens des deux pluralités de liens (1.11, 1.12) entre un ordinateur cible donné et chaque sélecteur sont constitués par un seul lien réseau connecté à une interface réseau unique dudit ordinateur cible, connecté dans une direction à un premier desdits dispositifs selon l'une des revendications 1 à 6, et connecté dans l'autre direction au second desdits dispositifs selon l'une des revendications 1 à 6.

9. Dispositif de connexion sélective selon l'une des revendications 7 ou 8, comportant en outre un troisième sélecteur au niveau du lien entre l'un des contrôleurs et au moins un périphérique connecté audit contrôleur, permettant la connexion directe d'au moins un ordinateur cible audit périphérique.

10. Système de contrôle sélectif d'un ordinateur cible parmi une pluralité d'ordinateurs cibles au moyen d'un organe de contrôle comportant au moins un périphérique d'ordinateur, ledit périphérique d'ordinateur étant connecté à la pluralité d'ordinateurs cibles au moyen d'un dispositif de connexion sélective selon l'une des revendications 1 à 9.

## Claims

1. Selective connection device (1.1) allowing the connection of at least one peripheral (1.7, 1.8, 1.9) to a target computer (1.3) among a plurality of target computers (1.2, 1.3, 1.4), comprising:
- a means (1.5, 1.6) of controlling the peripheral or peripherals (1.7, 1.8, 1.9), this control means being connected to the peripheral;
- a selector (1.17, 1.18);
- a first link (1.13, 1.25) for communicating data between the control means (1.5, 1.6) and the selector (1.17, 1.18);
- a plurality of data communication links (1.11, 1.12) between the plurality of target computers (1.2, 1.3, 1.4) and the selector (1.17, 1.18), each link in the plurality of links (1.11, 1.12) being connected to a target computer in the plurality of target computers (1.2, 1.3, 1.4), the selector (1.17, 1.18) allowing the connection of the first link to any one of the links in the plurality of links in order to allow communication between the control means (1.5, 1.6) and any one of the target computers (1.2, 1.3, 1.4);
**characterised in that** the selective connection device includes:
- a means (1.20, 1.21) for making the communication between the control means and the target computer physically unidirectional.

2. Device according to claim 1, **characterised in that**, the communication links being Ethernet links, the means for making the communication between the control means and the target computer physically unidirectional consists of a diode device (2.1) inserted on at least one of the links and consisting of a first Ethernet interface (2.4) comprising a reception port and a transmission port and a second Ethernet interface (2.5) comprising a reception port and a transmission port, the reception port of the first interface being connected to the transmission port of the second interface, the reception port of the second interface being kept disconnected from the transmission port of the first interface and an integrity signal being sent over the transmission port of the first interface.

3. Device according to claim 2, **characterised in that** the diode device integrating the selector comprises a plurality of first interfaces (3.4), the reception port of each of these first interfaces being connected to the transmission port of the second interface via a means (3.7) for interrupting the signal electrically controlled, so that only one of these reception ports of the first interfaces is actively connected to the transmission port of the second interface.

4. Device according to claim 2, **characterised in that** the diode device integrating the selector comprises a plurality of first interfaces, the transmission port of each of these first interfaces being connected to the reception port of the second interface via a means for interrupting the signal electrically controlled, so that only one of these transmission ports of the first interfaces is actively connected to the reception port of the second interface.

5. Device according to claim 1, **characterised in that**, the communication links being Ethernet links, the means for making the communication between the control means and the target computer physically unidirectional is integrated within an Ethernet interface of the said device, the said interface comprising a physical management module (4.2) of the Ethernet link and an MAC management module (4.3) of the Ethernet link connected by a bus (4.4) to the physical management module of the Ethernet link, the said bus consisting of unidirectional links, only the unidirectional links used by the communication in the desired direction being connected.

6. Device according to claim 5, **characterised in that** the interface hosting the means for making the communication between the control means and the target computer physically unidirectional contains a plurality of Ethernet interfaces (4.5), a plurality of physical management modules of the said interfaces (4.2), and a plurality of means (4.4) for interrupting the signal controlled electrically so that only one of the physical modules (4.2) of the plurality of physical modules is actively connected to the MAC management module (4.3).

7. Selective connection device comprising two devices according one of claims 1 to 6, **characterised in that** the directions of communication of the two devices are opposite to each other and **in that** the selectors are coupled.

8. Selective connection device according to claim 7, **characterised in that** the two links of the two plurality of links (1.11, 1.12) between a given target computer and each selector consist of a single network link connected to a single network interface of the said target computer, connected in one direction to a first one of the said devices according to one of claims 1 to 6 and connected in the other direction to the second of the said devices according to one of claims 1 to 6.

9. Selective connection device according one of claims 7 or 8, also comprising a third selector at the link between one of the controllers and at least one peripheral connected to the said controller, allowing direct connection of at least one target computer to the said peripheral.

10. Selective control system for a target computer among a plurality of target computers by means of a control device comprising at least one computer peripheral, the said computer peripheral being connected to the plurality of target computers by means of a selective connection device according to one of claims 1 to 9.

## Patentansprüche

1. Vorrichtung zur selektiven Verbindung (1.1), die eine Verbindung von mindestens einem Peripheriegerät (1.7, 1.8, 1.9) zu einem Zielcomputer (1.3) aus einer Vielzahl von Zielcomputern (1.2, 1.3, 1.4) erlaubt, enthaltend:
- ein Steuermittel (1.5, 1.6) für das oder die Peripheriegeräte (1.7, 1.8, 1.9), wobei dieses Steuermittel mit dem Peripheriegerät verbunden ist;
- einen Auswahlschalter (1.17, 1.18);
- eine erste Datenkommunikationsverbindung (1.13, 1.25) zwischen dem Steuermittel (1.5, 1.6) und dem Auswahlschalter (1.17, 1.18);
- eine Vielzahl von Datenkommunikationsverbindungen (1.11, 1.12) zwischen der Vielzahl von Zielcomputern (1.2, 1.3, 1.4) und dem Auswahlschalter (1.17, 1.18), wobei jede Verbindung der Vielzahl von Verbindungen (1.11, 1.12) mit einem Zielcomputer aus der Vielzahl von Zielcomputern (1.2, 1.3, 1.4) verbunden ist, wobei der Auswahlschalter (1.17, 1.18) das Verbinden der ersten Verbindung mit einer beliebigen Verbindung aus der Vielzahl von Verbindungen gestattet, um die Kommunikation zwischen dem Steuermittel (1.5, 1.6) und einem beliebigen der Zielcomputer (1.2, 1.3, 1.4) zu gestatten;
**dadurch gekennzeichnet, dass** die Vorrichtung zur selektiven Verbindung Folgendes integriert:
- ein Mittel (1.20, 1.21), um die Kommunikation zwischen dem Steuermittel und dem Zielcomputer physisch unidirektional zu machen.

2. Vorrichtung nach Anspruch 1, **dadurch gekennzeichnet, dass** dann, wenn die Kommunikationsverbindungen Ethernet-Verbindungen sind, das Mittel, um die Kommunikation zwischen dem Steuerelement und dem Zielcomputer physisch unidirektional zu machen, aus einer Diodeneinrichtung (2.1) gebildet ist, die in mindestens einer der Verbindungen eingefügt ist und aus einer ersten Ethernet-Schnittstelle (2.4) gebildet ist, die einen Empfangs-Port und einen Sende-Port aufweist, und einer zweiten Ethernet-Schnittstelle (2.5), die einen Empfangs-Port und einen Sende-Port aufweist, wobei der Empfangs-Port der ersten Schnittstelle mit dem Sende-Port der zweiten Schnittstelle verbunden ist, der Empfangs-Port der zweiten Schnittstelle am Sende-Port der ersten Schnittstelle verbindungslos gehalten wird, und ein Integritätssignal auf dem Sende-Port der ersten Schnittstelle gesendet wird.

3. Vorrichtung nach Anspruch 2, **dadurch gekennzeichnet, dass** die Diodeneinrichtung, in die der Auswahlschalter integriert ist, eine Vielzahl von ersten Schnittstellen (3.4) aufweist, wobei der Empfangs-Port jeder dieser ersten Schnittstellen über ein Mittel (3.7) mit dem Sende-Port der zweiten Schnittstelle verbunden ist, um das elektrisch gesteuerte Signal zu unterbrechen, so dass nur ein einziger dieser Empfangs-Ports der ersten Schnittstellen aktiv mit dem Sende-Port der zweiten Schnittstelle verbunden ist.

4. Vorrichtung nach Anspruch 2, **dadurch gekennzeichnet, dass** die Diodeneinrichtung, in die der Auswahlschalter integriert ist, eine Vielzahl von ersten Schnittstellen aufweist, wobei der Sende-Port jeder dieser ersten Schnittstellen über ein Mittel mit dem Empfangs-Port der zweiten Schnittstelle verbunden ist, um das elektrisch gesteuerte Signal zu unterbrechen, so dass nur ein einziger dieser Sende-Ports der ersten Schnittstellen aktiv mit dem Empfangs-Port der zweiten Schnittstelle verbunden ist.

5. Vorrichtung nach Anspruch 1, **dadurch gekennzeichnet, dass** dann, wenn die Kommunikationsverbindungen Ethernet-Verbindungen sind, das Mittel, um die Kommunikation zwischen dem Steuerelement und dem Zielcomputer physisch unidirektional zu machen, in eine Ethernet-Schnittstelle der Vorrichtung integriert ist, welche Schnittstelle eine physisches Verwaltungsmodul (4.2) für die Ethernet-Verbindung und ein MAC-Verwaltungsmodul (4.3) der Ethernet-Verbindung aufweist, das über einen Bus (4.4) mit dem physischen Verwaltungsmodul der Ethernet-Verbindung verbunden ist, wobei der Bus aus unidirektionalen Verbindungen gebildet wird, wobei nur die unidirektionalen Verbindungen, die von der Kommunikation in der gewünschten Richtung verwendet werden, verbunden sind.

6. Vorrichtung nach Anspruch 5, **dadurch gekennzeichnet, dass** die Schnittstelle, in der das Mittel untergebracht ist, mit dem die Kommunikation zwischen dem Steuermittel und dem Zielcomputer physisch unidirektional gemacht werden soll, eine Vielzahl von Ethernet-Schnittstellen (4.5), eine Vielzahl von physischen Verwaltungsmodulen für die Schnittstellen (4.2) und eine Vielzahl von Mitteln zum Unterbrechen des elektrisch gesteuerten Signals (4.4) enthält, so dass nur ein einziges der physischen Module (4.2) aus der Vielzahl von physischen Modulen aktiv mit dem MAC-Verwaltungsmodul (4.3) verbunden ist.

7. Vorrichtung zur selektiven Verbindung, die zwei Vorrichtungen nach einem der Ansprüche 1 bis 6 aufweist, **dadurch gekennzeichnet, dass** die Kommunikationsrichtungen der zwei Vorrichtungen einander entgegengesetzt sind, und dadurch, dass die Auswahlschalter gekoppelt sind.

8. Vorrichtung zur selektiven Verbindung nach Anspruch 7, **dadurch gekennzeichnet, dass** die zwei Verbindungen der zwei Vielzahlen von Verbindungen (1.11, 1.12) zwischen einem vorgegebenen Zielcomputer und jedem Auswahlschalter aus einer einzigen Netzverbindung gebildet werden, die mit einer eindeutigen Netzschnittstelle des Zielcomputers verbunden ist, der in einer Richtung mit der ersten der Vorrichtungen nach einem der Ansprüche 1 bis 6 verbunden ist und in der anderen Richtung mit der zweiten Vorrichtung nach einem der Ansprüche 1 bis 6 verbunden ist.

9. Vorrichtung zur selektiven Verbindung nach einem der Ansprüche 7 oder 8, die des Weiteren einen dritten Auswahlschalter auf der Ebene der Verbindung zwischen einer der Steuereinrichtungen und mindestens einem Peripheriegerät aufweist, das mit der Steuereinrichtung verbunden ist, wodurch die direkte Verbindung von mindestens einem Zielcomputer mit dem Peripheriegerät gestattet wird.

10. System zur selektiven Steuerung eines Zielcomputers aus einer Vielzahl von Zielcomputern mittels eine Steuerorgans, das mindestens ein Computer-Peripheriegerät aufweist, wobei das Computer-Peripheriegerät mit der Vielzahl von Zielcomputern mittels einer Vorrichtung zur selektiven Verbindung nach einem der Ansprüche 1 bis 9 verbunden ist.
